# EUROPEAN PATENT APPLICATION

(11) **EP 2 754 977 A1**
(43) Date of publication of application: **16.07.2014**
(21) Application number: 13425006.7
(22) Date of filing: 11.01.2013
(51) Int. Cl.: F24J 2/04, F24J 2/05, F24J 2/46

(54) **A solar collector having a corrugated tube**

(71) Applicant: Tre A S.r.l., 10042 Nichelino (TO) (IT)
(72) Inventor: Alessiato, Paolo, 10048 Vinovo (Torino) (IT); Canton, Pietro, 10088 Volpiano (Torino) (IT)
(74) Representative: Vanzini, Christian

(57) **Abstract**

Collector unit (10) for a system for converting solar energy to thermal energy, comprising at least one tubular collector element (120) adapted to contain a heat carrier fluid for converting solar radiation to thermal energy and for the transport of the thermal energy, the collector element having a tubular wall (121) of heat-conducting material designed to absorb solar radiation. The tubular wall of the tubular collector element (120) is corrugated, having a longitudinal profile which is corrugated along at least the greater part of its length.

## Description

The present invention relates to a collector unit for a system for converting solar energy to thermal energy, comprising at least one tubular collector element adapted to contain a heat carrier fluid for converting solar radiation to thermal energy and for the transport of the thermal energy, said collector element having a tubular wall of heat-conducting material designed to absorb solar radiation.

An example of a specific field of application of solar collectors is what are known as vacuum tube (or evacuated tube) solar panels, in which the collector element is provided inside a vacuum tube. In this field, there are two known systems for collecting and transporting heat.

The first, known as a "heat pipe" system, uses a sealed copper tube with a bulb fitted to its top, containing a liquid having a low evaporation temperature in vacuum conditions. When heated, the liquid evaporates and rises towards the bulb, which is placed in contact with the water to be heated; as it cools, the fluid condenses and flows back down by gravity. In order to collect more heat, the copper tube is fitted with aluminium fins of various shapes and with various types of coating.

The second system, known as a "U-tube" system, uses a copper tube which is bent into a U shape, and is also finned. This system is used to convey the same fluid as that used in the heat exchanger.

One object of the invention is to provide a solar panel which offers higher efficiency than that of the known systems, at relatively low cost.

This object is achieved, according to the invention, with a collector unit of the type defined initially, in which said tubular wall of the tubular collector element is corrugated, having a longitudinal profile which is corrugated along at least the greater part of its length.

By using corrugated tubes in place of conventional smooth tubes, a larger heat exchange surface can be provided using a simpler technology than that used for fitting fins, and therefore at a lower overall cost. Evidently, this feature provides benefits regardless of the type of solar heating installation in which the corrugated tube solar collector is used. Therefore, although the invention was developed in relation to vacuum tube solar panels, it is not limited to this specific field of application.

Preferred embodiments of the invention are defined in the dependent claims, which are to be considered as an integral part of the present description.

Further characteristics and advantages of the collector unit according to the invention will be made clear by the following detailed description, which refers to the attached drawings, provided purely by way of non-limiting example, in which:
- Figure 1 shows a sectional view of a collector unit according to the invention, and
- Figure 2 shows a sectional view of a detail of the collector unit according to an alternative embodiment.

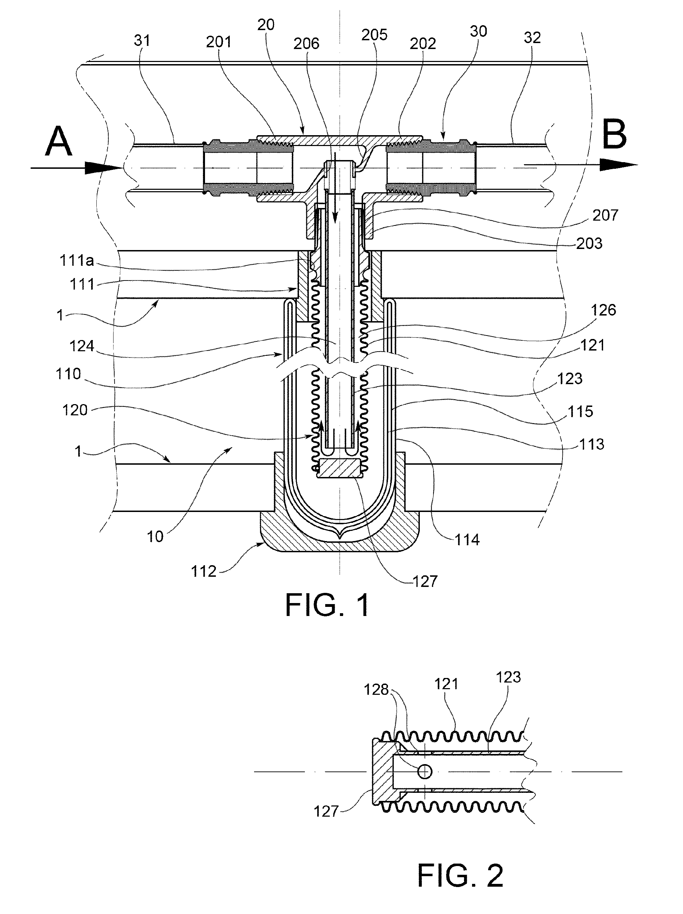

Figure 1 shows a portion of a solar panel provided with a corresponding collector unit. In particular, it shows a portion of the frame of the solar panel, indicated as a whole by 1, to which a collector unit 10 is fixed. The collector unit 10 is connected via a connector 20 to a transport line 30 for transporting a heat carrier fluid. In relation to this transport line, the drawing shows an inlet conduit 31, running from a preceding collector unit of the panel or from an external heat exchanger and adapted to carry a heat carrier fluid (arrow A) to the collector unit shown in the drawing, and an outlet conduit 32, leading to a subsequent collector unit of the panel or to the external heat exchanger, and adapted to carry the heat carrier fluid (arrow B) out of the collector unit shown in the drawing.

The collector unit 10 comprises a vacuum tube 110, which is fixed at opposite ends to the frame 1 of the solar panel by means of corresponding terminal connecting elements 111, 112.

The vacuum tube 110 comprises an inner tubular wall 113 and an outer tubular wall 114, both made of material transparent to solar radiation (such as borosilicate glass), which are positioned concentrically. Between these tubular walls there is interposed a space 115 in an evacuated condition; in the illustrated example, the space 115 is closed at one end by a terminal wall portion which interconnects the inner and outer tubular walls, while at the other end each tubular wall is closed in the form of a bell. In a large installation, where the collector is very long, a plurality of vacuum tubes are mounted in Indian file and interconnected by expansion-compensating means; in this case, each vacuum tube is made to be open at one or both of its ends. The vacuum tube 110 allows the solar radiation to penetrate into the cavity formed within the inner tubular wall of the vacuum tube, retaining the heat inside this cavity by means of the evacuated space between the tubular walls 113 and 115.

In the illustrated example, the chamber formed within the inner tubular wall of the vacuum tube is closed at one end by one of the terminal connecting elements 111, inside which a passage 111a is formed.

The collector unit 10 further comprises at least one tubular collector element 120 adapted to contain a heat carrier fluid for converting solar radiation to thermal energy and for transporting the thermal energy. This collector element 120 is positioned within the inner tubular wall 113 of the vacuum tube 110 and has a tubular wall 121 of heat-conducting material, for example stainless steel, copper or aluminium, designed to absorb solar radiation. In order to promote the absorption of the solar radiation, the outer surface of this tubular wall 121 can be coated with an absorption-promoting material, deposited for example by PVD, CVD or electroplating.

According to the invention, the tubular wall 121 of the tubular collector element 120 is corrugated, having a longitudinal profile which is corrugated along at least the greater part of its length. A corrugated tube has a contact surface area equal to about twice that of a smooth tube of the same length and diameter. However, a corrugated tube is easy to form in terms of production, compared with a finned tube.

The tubular collector element 120 comprises, in particular, an inner tube 123 and an outer tube (formed by the tubular wall 121 in the illustrated example), these tubes being positioned concentrically and defining a first space 124, positioned within the inner tube 123, and a second space 126, interposed between the inner tube 123 and the outer tube 121, these spaces being provided to allow the passage of the heat carrier fluid in mutually opposite directions. In the illustrated example, colder fluid from the connector 20 flows in the first space 124 and is guided towards the free end of the tubular collector element 120, while hotter fluid (heated by the corrugated tubular wall which in turn is heated by the solar radiation) flows in the second space 126 from the free end of the collector element towards the connector 20. The inner tube 123 and outer tube 121 are therefore in fluid connection with each other at the free end of the tubular collector element. In a large installation, in which a plurality of vacuum tubes are made to be mounted in Indian file, a plurality of collector elements are also made to be mounted in Indian file.

In any case, as shown in the illustrated example, the corrugated outer tube 121 is closed by a closure element 127 at the free end of the tube. This closure element 127 is spaced apart from the end of the inner tube 123 adjacent to it, so as to provide fluid communication between the first space 124 within the inner tube 123 and the second space 126 interposed between the inner tube 123 and outer tube 121.

In an alternative embodiment, shown in Figure 2, the closure element also closes the adjacent end of the inner tube 123; in order to provide fluid communication between the inner and outer tubes, the inner tube 123 has one or more lateral apertures 128 adjacent to the aforesaid end. Additionally, the closure element 127 is made in one piece with the inner tube 123.

The tubular collector element 110 extends concentrically with the vacuum tube 110, emerging from one end of the latter through the passage 111a formed in the terminal connecting element 111. At one of its ends, the tubular collector element is therefore connected to the transport line 30 via the connector 20.

The connector 20 comprises a fluid inlet branch 201, adapted to be connected to the inlet conduit 31, a fluid outlet branch 202, adapted to be connected to the outlet conduit 32, and a collector connection branch 203, adapted to be connected to the tubular collector element 120.

The three branches 201, 202, 203 of the connector converge in an intersection area of the connector, in which is formed a deflector partition 205 separating the fluid inlet branch 201 from the fluid outlet branch 202, and having a seat 206 for connection to the inner tube 123 of the tubular collector element 120. On the other hand, the corrugated outer tube 121 is connected to a seat 207 formed in the collector connection branch 230. The fluid connection between the inner tube 123 of the collector element 120 and the fluid transport line, and particularly with the inlet conduit 31, is formed by means of the seat 206.

The connection between the connector and the corresponding conduits and/or tubes can be, for example, a threaded connection, a welded connection, or a quick-release connection, and can be of the same type for each conduit and/or tube or of mixed types.

## Claims

1. Collector unit (10) for a system for converting solar energy to thermal energy, comprising at least one tubular collector element (120) adapted to contain a heat carrier fluid for converting solar radiation to thermal energy and for the transport of the thermal energy, said collector element having a tubular wall (121) of heat-conducting material designed to absorb solar radiation;
**characterized in that**
said tubular wall of the tubular collector element (120) is corrugated, having a longitudinal profile which is corrugated along at least the greater part of its length.

2. Unit according to Claim 1, further comprising a vacuum tube (110) comprising an inner tubular wall (113) and an outer tubular wall (114) made of material transparent to solar radiation, these walls being positioned concentrically and having an interposed space (115) in an evacuated condition between them, in which said tubular collector element is positioned between the inner tubular wall (113) of the vacuum tube (110).

3. Unit according to Claim 1 or 2, in which said tubular collector element comprises an inner tube (123) and an outer tube (121), positioned concentrically and defining a first space (124), positioned within the inner tube (123), and a second space (126), interposed between the inner tube (123) and the outer tube (121), these spaces being provided to allow the passage of the heat carrier fluid in mutually opposite directions.

4. Unit according to Claim 3, in which said inner tube and outer tube are in fluid connection with each other at one end of the tubular collector element (120).

5. Unit according to Claim 4, in which said outer tube is closed by a closure element (127) at the end at which said inner tube and outer tube are in fluid connection with each other.

6. Unit according to Claim 4, in which said closure element is spaced apart from an end of the inner tube adjacent to it.

7. Unit according to Claim 5, in which said closure element also closes one end of the inner tube, said inner tube having one or more lateral apertures (128) adjacent to said end.

8. Unit according to Claim 7, in which said closure element is made in one piece with the inner tube.

9. Unit according to any of Claims 3 to 8, further comprising a connector (20) for connecting said tubular collector element to a fluid transport line (30), said connector comprising a fluid inlet branch (201), a fluid outlet branch (202), and a collector connection branch (203) converging in an intersection area of the connector, in which is formed a deflector partition (205) separating the fluid inlet branch (201) from the fluid outlet branch (202), and having a seat (206) for connection to the inner tube (123) of the tubular collector element (120), said collector connection branch having a seat (207) for connection to the outer tube (121) of the tubular collector element (120).
